# EUROPEAN PATENT SPECIFICATION

(11) **EP 4 025 814 B1**
(45) Date of publication and mention of the grant of the patent: **19.06.2024**
(21) Application number: 20781612.5
(22) Date of filing: 02.09.2020
(51) Int. Cl.: F16K 31/06, F16K 27/02, F16K 41/04, F16K 31/04, F16K 31/00, F16K 3/24, F16K 27/04, F16K 1/42

(54) **A VALVE, IN PARTICULAR FOR HOUSEHOLD APPLIANCES**
VENTIL, INSBESONDERE FÜR HAUSHALTSGERÄTE
SOUPAPE, EN PARTICULIER POUR APPAREILS ÉLECTROMÉNAGERS

(30) Priority: 02.09.2019 IT 201900015384
(43) Date of publication of application: 13.07.2022
(73) Proprietor: R.P.E. S.r.l., 22070 Carbonate (CO) (IT)
(72) Inventor: ROIC, Stefano, 22070 Carbonate (CO) (IT); BERLUSCONI, Giordano, 22070 Carbonate (CO) (IT); TACCONI, Luca, 22070 Carbonate (CO) (IT)
(74) Representative: Studio Torta S.p.A.
(86) International application number: PCT/IB2020/058176
(87) International publication number: WO 2021/044314

(56) References cited:
- DE-U1- 7 928 924
- FR-A1- 2 310 504
- KR-B1- 101 959 992
- US-A- 2 822 824
- US-A- 3 327 992
- US-A1- 2014 332 093
- US-A1- 2018 180 192
- US-A1- 2019 093 786

## Description

### CROSS-REFERENCE TO RELATED APPLICATIONS

This patent application claims priority from Italian patent application no. 102019000015384 filed on 02/09/2019,

### TECHNICAL FIELD

The invention relates to a fluid supply valve for household appliances.

In particular, the invention deals with a supply valve used in hydraulic circuits of ovens, steam machines and coffee machines, without for this reason limiting the wide range of possible applications of the present invention.

### BACKGROUND ART

A fluid supply valve generally comprises a valve body, a shutter assembly, which is movable within the valve body between an open position and a closed position, and a flexible membrane, which is interposed between the shutter assembly and the valve body and is configured to prevent fluid from leaking from valve body.

As examples, documents US 2014/332093, US 2018/180192, KR 101,959,992, FR 2,310,504 and US 2,822,824 disclose respective valves to control the supply of a fluid. In particular, US 2014/332093 discloses a valve according to the preamble of claim 1.

In known valves of the type identified above, the fitting of the shutter assembly on the valve body is complicated and, therefore, time-consuming.

### DISCLOSURE OF INVENTION

The object of the invention is to provide a valve of the type identified above, which can reduce the drawbacks of the prior art.

According to the invention, there is provided a valve for household appliances as claimed in Claim 1.

Thanks to the invention, it is possible to ensure the seal of the fluid under pressure even in the absence of a membrane mounted inside the valve body.

Furthermore, the fitting of the shutter assembly on the valve body is simple, quick and made easier by the absence of the membrane and by the simple assembly of rigid bodies with complementary shapes.

According to the invention, the valve comprises a further tubular body, which is coupled to the valve body by means of a bayonet coupling.

In this way, the further tubular body can be installed and removed in an easier manner.

In particular, the shutter assembly comprises a shutter with a cylindrical shape or a conical shape or the shape of a truncated cone.

In this way, the fluid flow through the tubular body can be chocked.

According to the invention, the tubular body is housed inside the valve body and is axially clamped between the valve body and the further tubular body, so as to keep the tubular body in a predetermined position.

In particular examples not being part of the claimed invention, the valve body comprises a first and a second element coupled to one another.

In this way, the valve can easily be assembled. More in detail, the first and the second element can be coupled to one another around the tubular body.

In said particular examples, the tubular body is axially clamped between the first and the second element of the valve body.

In this way, the tubular body can be kept in a predetermined position.

### BRIEF DESCRIPTION OF THE DRAWINGS

Further features and advantages of the invention will be best understood upon perusal of the following description of non-limiting embodiments thereof, with reference to the accompanying Figures, wherein:
- Figures 1 and 2 are longitudinal section views, with parts removed for greater clarity, of a valve according to the invention, in a closed and in an open configuration, respectively;
- Figure 3 is a perspective view, with parts removed for greater clarity, of a tubular body of the valve of Figures 1 and 2;
- Figure 4 is longitudinal section view, with parts removed for greater clarity, of a detail of a variant of the valve of Figures 1 and 2;
- Figures 5 and 6 are longitudinal section views, with parts removed for greater clarity, of a valve according to a further example not being part of the invention, in a closed and in an open configuration, respectively; and
- Figure 7 is a perspective view, with parts removed for greater clarity, of a tubular body of the valve of Figures 5 and 6.

### BEST MODE FOR CARRYING OUT THE INVENTION

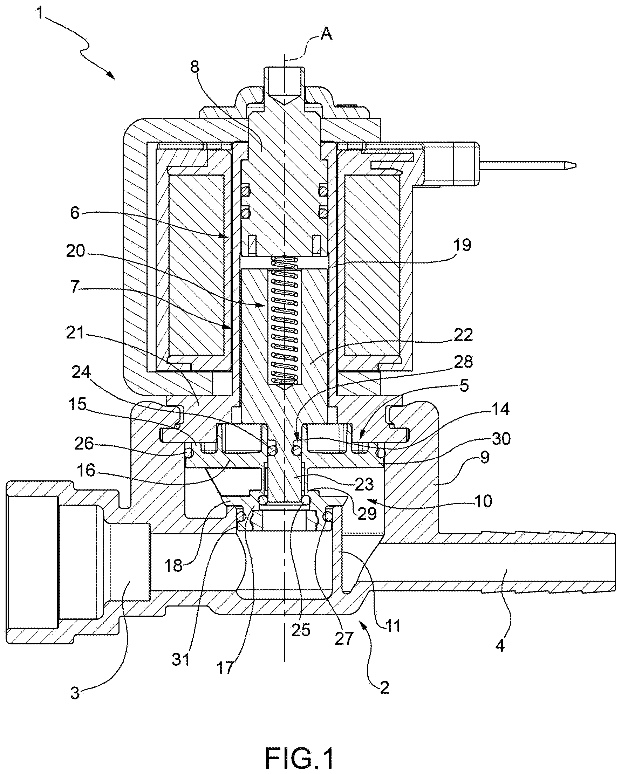

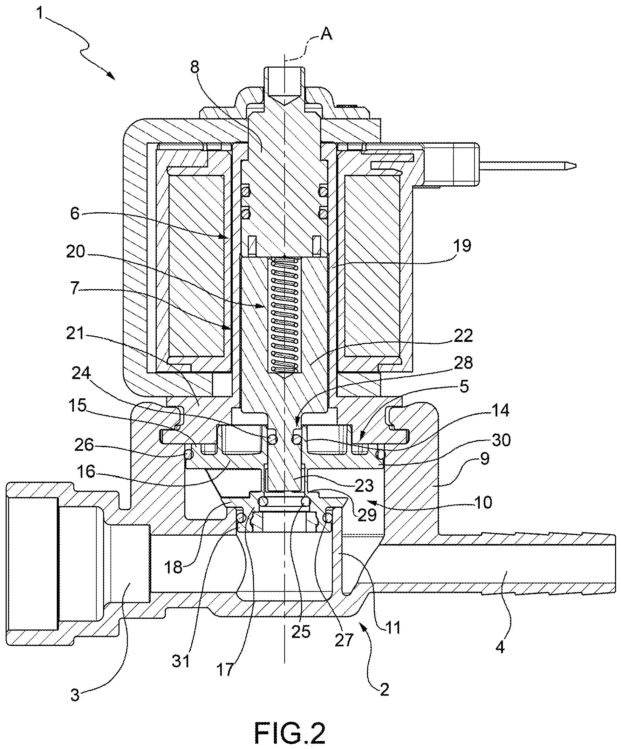

With reference to Figures 1 and 2, number 1 indicates, as a whole, a fluid supply valve, which finds particular application in the field of household appliances. In particular, the valve 1 is used in hydraulic circuits of ovens, steam machines and coffee machines, without for this reason limiting the wide range of possible applications of the invention itself. The valve 1 extends along a longitudinal axis A and comprises a valve body 2 having a supply duct 3 and a delivery duct 4; a rigid tubular body 5, which is partially housed within the valve body 2; a tubular body 6, which holds the tubular body 5 in position inside the valve body 2; a shutter assembly 7, which is movable along the longitudinal axis A relative to the valve body 2; and an actuator 8 to control the position of the shutter assembly 7 along the longitudinal axis A. The supply duct 3 and the delivery duct 4 are obtained inside the valve body 2, which comprises a cylindrical wall 9 having an inner portion, which is shaped so as to be coupled to the tubular body 5; a chamber 10, which is delimited by the cylindrical wall 9; and a cylindrical wall 11 extending around the longitudinal axis A and arranged at an end of the supply duct 3.

The cylindrical wall 9 extends around the longitudinal axis A and delimits the chamber 10, which establishes a communication between the supply duct 3 and the delivery duct 4. The cylindrical wall 11 extends around the longitudinal axis A, has smaller diameter than the diameter of the cylindrical wall 9 and is placed inside the chamber 10 so as to allow fluid to flow from the supply duct 3 to the chamber 10.

According to an embodiment, the fluid flows from the supply duct 3 towards the delivery duct 4.

The tubular body 5 is arranged inside the chamber 10 and comprises an inner cylindrical wall 14, which extends along the longitudinal axis A; an outer cylindrical wall 15; an annular plate 16, which is arranged around the longitudinal axis A and delimits the chamber 10; a tubular portion 17, which is arranged inside the cylindrical wall 11; and an annular wall 18, which is arranged around the longitudinal axis A and is configured to rest against the cylindrical wall 11. In other words, the tubular body 5 and the valve body 2 are configured to create a shape coupling between the tubular body 5 and the valve body 2 and to define a one-way position of the tubular body 5 in the valve body 2. The tubular body 6 comprises a cylindrical wall 19, which extends along the longitudinal axis A, a through opening 20, which is delimited by the cylindrical wall 19, and an annular wall 21, which is arranged around the longitudinal axis A at an end of the tubular body 6 and is configured to rest against the outer cylindrical wall 15 so as to clamp the tubular body 5 inside the chamber 10. The annular wall 21 is shaped so as to be coupled to the cylindrical wall 9 with a bayonet coupling.

According to an alternative embodiment which is not shown in the accompanying Figures, the tubular body 5 and the tubular body 6 are coupled in an integral manner.

The shutter assembly 7 is configured to slide along the longitudinal axis A inside the tubular body 5 and the tubular body 6, between an opening position and a closing position. In particular, the shutter assembly 7 comprises a cylindrical body 22, which is at least partially arranged inside the through opening 20 and can slide along the longitudinal axis A relative to the tubular body 6, and a cylindrical body 23, which has a smaller diameter than the diameter of the cylindrical body 22 and builds the lengthening of the cylindrical body 22. The cylindrical body 23 is at least partially arranged inside a central through opening of the tubular body 5 and can slide along the longitudinal axis A relative to the tubular body 5. The shutter 8 is coupled to an end of the cylindrical body 22 and is at least partially arranged inside the through opening 20. In particular, the actuator 8 is a linear motor.

According to a particular embodiment which is not shown in the accompanying Figures, the actuator 8 comprises a stepper motor.

According to a further particular embodiment which is not shown in the accompanying Figures, the actuator 8 is a piezoelectric actuator and comprises a motion amplification mechanism.

The valve 1 comprises an annular sealing member 24 and an annular sealing member 25, which are arranged between the cylindrical body 23 and the inner cylindrical wall 14; an annular sealing member 26, which is arranged between the outer cylindrical wall 15 and the cylindrical wall 9; and an annular sealing member 27, which is arranged between the cylindrical body 23 and the cylindrical wall 11.

According to the claimed invention, the annular sealing members 24, 25 are O-rings.

According to a preferred embodiment, the annular sealing members 24, 25, 26 and 27 are O-rings.

"O-ring" means a rubber ring with a circular section used as mechanical gasket. O-rings are designed to be inserted into suitable housings and be compressed during the assembly of one or more parts, thus creating a sealing gasket. The cylindrical body 23 comprises an annular seat 28, which houses, on the inside, the annular sealing member 24. In particular, the annular seat 28 has an axial extension which is greater than the axial size of the annular sealing member 24. In this configuration, the annular sealing member 24 separates a wet area from a dry area along the cylindrical body 23. The inner cylindrical wall 14 comprises an abutment 29 in the area of the annular wall 18, which is configured to house the annular sealing member 25.

The annular sealing member 25 is configured to interfere with an end of the cylindrical body 23 so as to selectively interrupt the fluid flow between the supply duct 3 and the delivery duct 4. The outer cylindrical wall 15 comprises an abutment 30, which is configured to house the annular sealing member 26 so as to prevent fluid from leaking between the cylindrical wall 9 and the outer cylindrical wall 15. The tubular portion 17 comprises an abutment 31, which is configured to hold the annular sealing member 27 together with the annular wall 18 so as prevent fluid from leaking between the tubular portion 17 and the cylindrical wall 11.

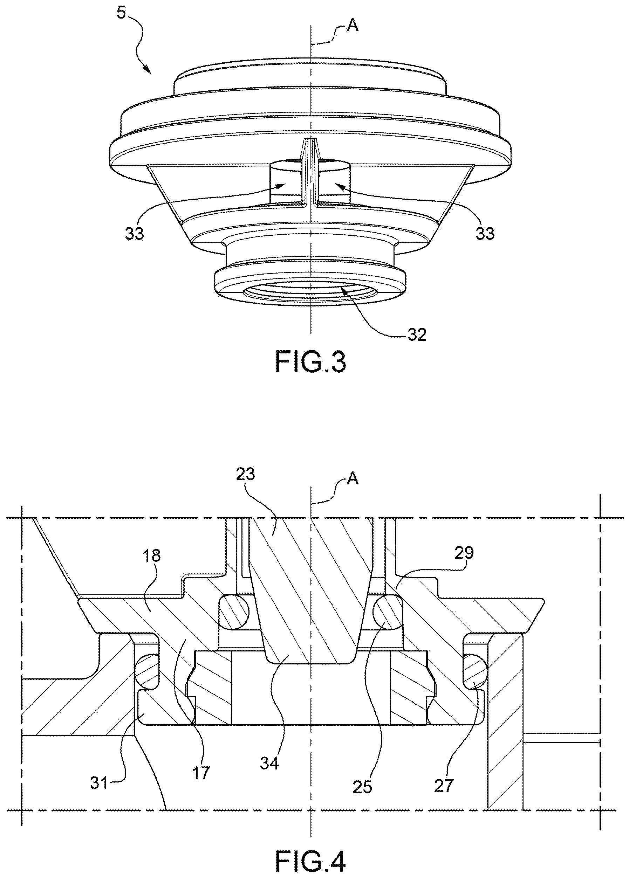

With reference to Figure 3, the tubular body 5 is made of a rigid material, in particular a metal material. In other words, the tubular body 5 is made of an non-deformable material. The tubular body 5 comprises an opening 32 extending around the longitudinal axis A and a plurality of lateral openings 33.

In use and with reference to Figure 1, the valve 1 is shown in the closed configuration. In this configuration, the cylindrical body 23 is in contact with the annular sealing member 25 and stops the fluid flow between the supply duct 3 and the delivery duct 4. The annular sealing members 25 and 27 ensure the seal of the fluid under pressure and prevent the fluid from leaking into the chamber 10.

With reference to Figure 2, the valve 1 is shown in the open configuration, in which the cylindrical body 23 is at a given distance from the annular sealing member 25, thus delimiting, together with the annular sealing member 25, a passage section through which the fluid flows. In other words, the cylindrical body 23 is not in contact with the annular sealing member 25, thus allowing the fluid to flow between the cylindrical body 23 and the annular sealing member 25.

As a consequence, the fluid flows from the supply duct 3 to the delivery duct 4 through the chamber 10. The annular sealing members 24 and 26 ensure the seal of the fluid under pressure and prevent the fluid from leaking out of the valve 1. When shifting from the open configuration to the closed configuration or vice versa, the actuator 8 controls the sliding of the cylindrical bodies 22 and 23 inside the tubular bodies 5 and 6.

With reference to Figure 4, a variant of the embodiment of the valve 1 is shown, in which the cylindrical body 23 has an end shaped like a truncated cone 34. In this configuration, the extension of the passage section delimited by the end shaped like a truncated cone 34 and by the annular sealing member 25 is adjusted through the positioning of the cylindrical body 23 along the longitudinal axis A. As a consequence, by adjusting the position of the cylindrical body 23 along the longitudinal axis A, the flow rate of fluid through the tubular body 5 is adjusted.

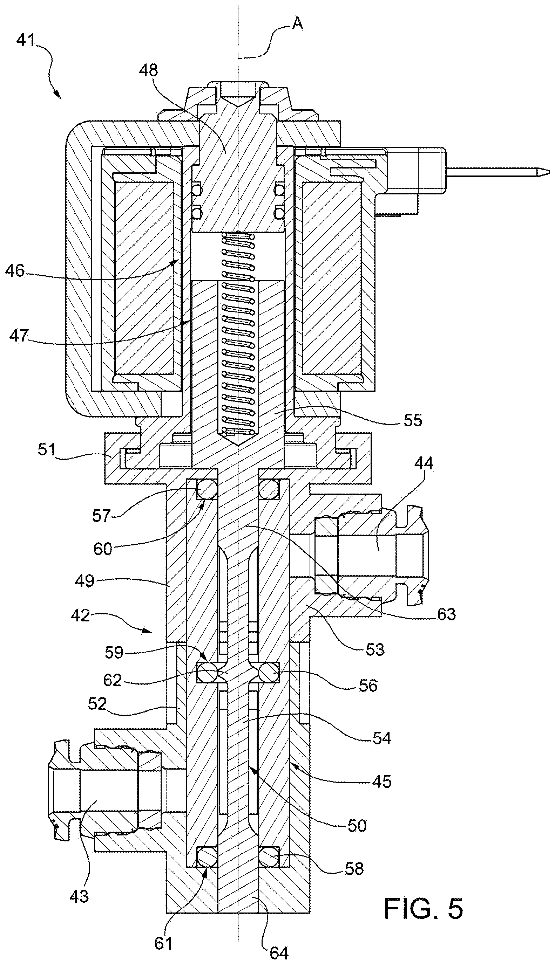

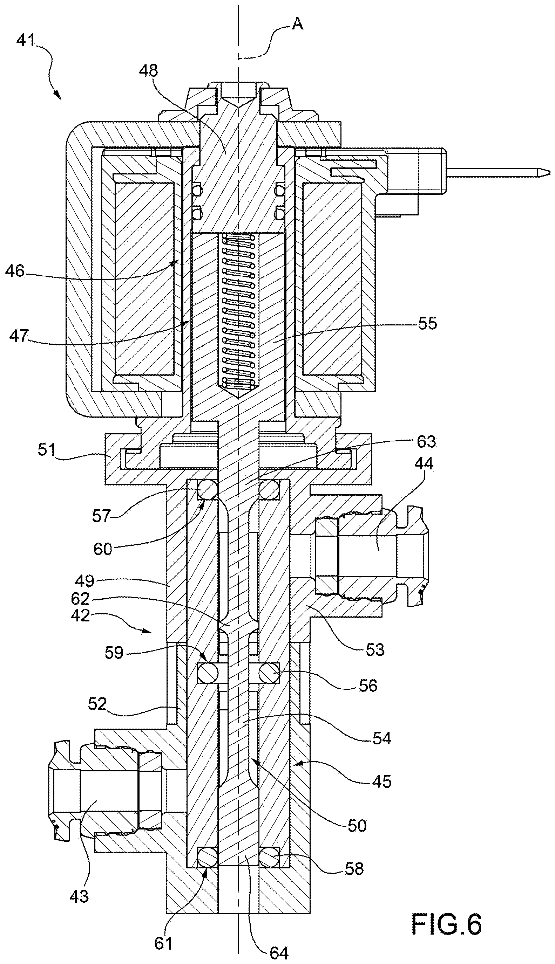

According to the examples (not being part of the claimed invention) of Figures 5 and 6, number 41 indicates a fluid supply valve, which finds particular application in hydraulic circuits of ovens, steam machines and coffee machines, without for this reason limiting the wide rage of possible applications of these examples.

The valve 41 extends along a longitudinal axis A and comprises a valve body 42 having a supply duct 43 and a delivery duct 44; a tubular body 45, which is partially housed within the valve body 42; a tubular body 46, which extends along the longitudinal axis A and is coupled to the valve body 42; a shutter assembly 47, which is movable along the longitudinal axis A relative to the valve body 42; and an actuator 48 to control the position of the shutter assembly 47 along the longitudinal axis A. The supply duct 43 and the delivery duct 44 are obtained in the valve body 42, which comprises a cylindrical wall 49 having a portion shaped so as to be coupled to the tubular body 45; a chamber 50, which is delimited by the cylindrical wall 49; and a cylindrical wall 51 extending around the longitudinal axis A and arranged at the upper end of the valve body 42. The cylindrical wall 49 extends around the longitudinal axis A and delimits the chamber 50, which connects the supply duct 3 to the delivery duct 4. The cylindrical wall 51 extends around the longitudinal axis A, has a greater diameter than the diameter of the cylindrical wall 49 and is shaped so as to be coupled to the tubular body 46 with a bayonet coupling. The valve body 42 comprises an element 52, which is connected to the supply duct 43 in a fluid-carrying manner; and an element 53, which is coupled to the element 52 in a snapping fashion and is connected to the delivery duct 44 in a fluid-carrying manner. The tubular body 45 is axially clamped between the elements 52 and 53. According to an alternative example not being part of the claimed invention and which is not shown in the accompanying Figures, the valve body consists of one single tubular body.

The shutter assembly 47 is movable along the longitudinal axis A between an open position and a closed position to enable and interrupt, respectively, the passage of fluid through the tubular body 45. In particular, the shutter assembly 47 comprises a stem 54, which is arranged inside the tubular body 45, and a cylindrical body 55, which has a greater diameter than the diameter of the stem 54 and builds a lengthening of the stem 54.

The valve 41 comprises an annular sealing member 56, an annular sealing member 57 and an annular sealing member 58, which are arranged between the stem 54 and the tubular body 45. In particular, the tubular body 45 comprises an annular seat 59, which is obtained in a central portion of the tubular body 45 and houses the annular sealing member 56, an annular seat 60 and an annular seat 61, which are obtained in the area of the opposite ends of the tubular body 45 and house the annular sealing members 57 and 58, respectively.

According to a preferred example not being part of the claimed invention, the annular sealing members 56, 57 and 58 are O-rings.

The stem 54 comprises an ogive-shaped portion 62, which is arranged in the central part of the stem 54 and is configured to interfere with the annular sealing member 56 so as to selectively interrupt the fluid flow through the tubular body 45; and two portions 63 and 64, which are arranged at the opposite ends of the stem 54 and are configured to interfere with the annular sealing members 57 and 58, respectively, so as to prevent fluid from leaking out of the valve 41. In this configuration, the annular sealing member 57 separates a wet area from a dry area along the stem 54.

In use and with reference to Figure 5, the valve 41 is shown in the closed configuration. In this configuration, the ogive-shaped portion 62 of the stem 54 interferes with the annular sealing member 56, thus stopping the passage of fluid through the tubular body 45. The annular sealing members 57 and 58 interfere with the portions 63 and 64 of the stem, respectively, hence ensuring the seal of the fluid under pressure and preventing the fluid from leaking out of the valve 41.

With reference to Figure 6, the valve 41 is shown in the open configuration. In this configuration, the ogive-shaped portion 62 of the stem 54 is at a given distance from the annular sealing member 56, thus allowing fluid to flow through the tubular body 45. In other words, the ogive-shaped portion 62 of the stem 54 is not in contact with the annular sealing member 56 and allows fluid to flow through. When shifting from the open configuration to the closed configuration or vice versa, the stem 54 slides along the longitudinal axis A, thus causing the portions 63 and 64 to slide on the annular sealing members 57 and 58, respectively. In other words, in each operating configuration, the portions 63 and 64 of the stem 54 are in contact with the annular sealing members 57 and 58, respectively, hence preventing fluid from leaking out of the valve body 42.

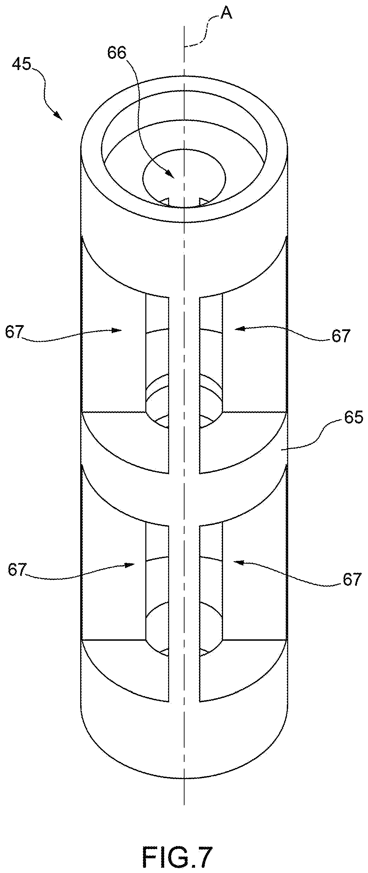

With reference to Figure 7, the tubular body 45 has a cylindrical wall 65 having an axial through opening 66 and a plurality of lateral openings 67, which connect the chamber 50 to the supply duct 43 and to the delivery duct 44 in a fluid-carrying manner. The annular seats 60 and 61 are obtained in the cylindrical wall 65 in the area of the ends of the tubular body 45. In particular, the annular seats 60 and 61 are arranged in a symmetrical manner relative a plane going through the centre of the tubular body 45 and transverse to the longitudinal axis A.

Finally, the invention can evidently be subjected to variants to the embodiments described herein, though without going beyond the scope of protection set forth in the appended claims.

## Claims

1. A valve, in particular for household appliances; the valve (1) comprising:
- a valve body (2) having at least one supply duct (3) at least one delivery duct (4), and a chamber (10), which extends around a longitudinal axis (A) between the at least one supply duct (3) and the at least one delivery duct (4)
- a shutter assembly (7) movable with respect to the valve body (2) along the longitudinal axis (A) between an open position and a closed position to respectively allow and interrupt the flow of a fluid between the at least one supply duct (3) and the at least one delivery duct (4);
- a first rigid tubular body (5), which extends along the longitudinal axis (A), is configured to guide the shutter assembly (7), is at least partially housed within the valve body (2) and comprises one opening (32) extending about the longitudinal axis (A) and a plurality of lateral openings (33);
- a second tubular body (6), which is coupled to the valve body (2; 42);
- a first annular sealing member (24) placed between the shutter assembly (7) and the first tubular body (5) so as to separate a wet area from a dry area along the first tubular body (5); and
wherein the first tubular body (5) is housed in the valve body (2) and is axially clamped between the valve body (2) and the second tubular body (6),
**characterized in that**
the second tubular body (6) is coupled to the valve body (2) by means of a bayonet coupling; and **in that**
the valve further comprises a second annular sealing member (25) housed in the first tubular body (5) and configured to interfere with the shutter assembly (7) so as to interrupt the flow of fluid between the at least one supply duct (3) and the at least one delivery duct (4), wherein the first annular sealing member (24) and the second annular sealing member (25) are O-rings.

2. The valve as claimed in Claim 1, and comprising an actuator (8) to control the position of the shutter assembly (7) along the longitudinal axis (A), in particular the actuator (8) is a solenoid or a stepper motor or a piezoelectric actuator.

3. The valve as claimed in any one of the foregoing Claims, wherein the first annular sealing member (24) is housed in an annular seat (28) located in the first tubular body (5) and/or in the shutter assembly (7)

4. The valve as claimed in any one of the foregoing Claims, wherein the shutter assembly (7) comprises a shutter of cylindrical or conical or truncated cone shape.

5. The valve as claimed in any one of the foregoing Claims, wherein the first tubular body (5) has an axial channel (32) for housing the shutter assembly (7) and at least one lateral opening (33) to allow the fluid to flow from the axial channel (32) to the at least one delivery duct (4).

6. The valve as claimed in any one of the foregoing Claims, wherein the first tubular body (5) comprises an annular plate (16) that extends around the longitudinal axis (A) and defines the upper wall of the chamber (10).

7. The valve as claimed in any one of the foregoing Claims, wherein the valve body (2) comprises a cylindrical wall (9) arranged around the longitudinal axis (A), and the first tubular body (5) is coupled to the cylindrical wall (9) by means of a third annular sealing member (26).

8. The valve as claimed in any one of the foregoing Claims, wherein the valve body (2) comprises a further cylindrical wall (11), the first tubular body (5) being coupled to the further cylindrical wall (11) by means of a fourth annular sealing member (27).

## Patentansprüche

1. Ein Ventil, insbesondere für Haushaltsgeräte; das Ventil (1) umfassend:
- einen Ventilkörper (2) mit mindestens einem Zulaufkanal (3), mindestens einem Ablaufkanal (4) und einer Kammer (10), die sich um eine Längsachse (A) zwischen dem mindestens einen Zulaufkanal (3) und dem mindestens einen Ablaufkanal (4) erstreckt;
- eine Verschlussbaugruppe (7), die in Bezug auf den Ventilkörper (2) entlang der Längsachse (A) zwischen einer offenen Position und einer geschlossenen Position beweglich ist, um entsprechend den Durchfluss eines Fluids zwischen dem mindestens einen Zulaufkanal (3) und dem mindestens einen Ablaufkanal (4) zu ermöglichen und zu unterbrechen;
- einen ersten starren rohrförmigen Körper (5), der sich entlang der Längsachse (A) erstreckt, der so konfiguriert ist, dass er die Verschlussbaugruppe (7) führt, der zumindest teilweise innerhalb des Ventilkörpers (2) untergebracht ist, und der eine Öffnung (32), die sich um die Längsachse (A) erstreckt und eine Vielzahl von seitlichen Öffnungen (33) aufweist
- einen zweiten rohrförmigen Körper (6), der mit dem Ventilkörper (2; 42) verbunden ist;
- ein erstes ringförmiges Dichtungselement (24), das zwischen der Verschlussbaugruppe (7) und dem ersten rohrförmigen Körper (5) angeordnet ist, um einen nassen Bereich von einem trockenen Bereich entlang des ersten rohrförmigen Körpers (5) zu trennen; und
wobei der erste rohrförmige Körper (5) in dem Ventilkörper (2) untergebracht ist und axial zwischen dem Ventilkörper (2) und dem zweiten rohrförmigen Körper (6) eingeklemmt ist,
**dadurch gekennzeichnet, dass**
der zweite rohrförmige Körper (6) mit dem Ventilkörper (2) mittels einer Bajonettkupplung gekoppelt ist; und dadurch, dass
das Ventil ferner ein zweites ringförmiges Dichtungselement (25) umfasst, das in dem ersten rohrförmigen Körper (5) untergebracht und so konfiguriert ist, dass es mit der Verschlussbaugruppe (7) zusammenwirkt, um den Fluidstrom zwischen dem mindestens einen Zulaufkanal (3) und dem mindestens einen Ablaufkanal (4) zu unterbrechen, wobei das erste ringförmige Dichtungselement (24) und das zweite ringförmige Dichtungselement (25) O-Ringe sind.

2. Das Ventil nach Anspruch 1, mit einem Aktuator (8) zur Steuerung der Position der Verschlussbaugruppe (7) entlang der Längsachse (A), wobei der Aktuator (8) insbesondere ein Solenoid oder ein Schrittmotor oder ein piezoelektrischer Aktuator ist.

3. Das Ventil nach einem der vorhergehenden Ansprüche, wobei das erste ringförmige Dichtungselement (24) in einem ringförmigen Sitz (28) untergebracht ist, der sich in dem ersten rohrförmigen Körper (5) und/oder in der Verschlussbaugruppe (7) befindet.

4. Das Ventil nach einem der vorhergehenden Ansprüche, wobei die Verschlussbaugruppe (7) einen zylindrischen oder konischen oder kegelstumpfförmigen Verschluss aufweist.

5. Das Ventil nach einem der vorhergehenden Ansprüche, wobei der erste rohrförmige Körper (5) einen axialen Kanal (32) zur Aufnahme der Verschlussbaugruppe (7) und mindestens eine seitliche Öffnung (33) aufweist, damit das Fluid aus dem axialen Kanal (32) zu dem mindestens einen Zulaufkanal (4) strömen kann.

6. Ventil nach einem der vorhergehenden Ansprüche, wobei der erste rohrförmige Körper (5) eine ringförmige Platte (16) aufweist, die sich um die Längsachse (A) erstreckt und die obere Wand der Kammer (10) bildet.

7. Ventil nach einem der vorhergehenden Ansprüche, wobei der Ventilkörper (2) eine zylindrische Wand (9) aufweist, die um die Längsachse (A) herum angeordnet ist, und der erste rohrförmige Körper (5) mit der zylindrischen Wand (9) mittels eines dritten ringförmigen Dichtungselements (26) gekoppelt ist.

8. Ventil nach einem der vorhergehenden Ansprüche, wobei der Ventilkörper (2) eine weitere zylindrische Wand (11) aufweist, wobei der erste rohrförmige Körper (5) mit der weiteren zylindrischen Wand (11) mittels eines vierten ringförmigen Dichtungselements (27) gekoppelt ist.

## Revendications

1. Soupape, en particulier pour des appareils électroménagers ; la soupape (1) comprenant :
- un corps de soupape (2) présentant au moins un conduit d'alimentation (3), au moins un conduit de fourniture (4) et une chambre (10) qui s'étend autour d'un axe longitudinal (A) entre l'au moins un conduit d'alimentation (3) et l'au moins un conduit de fourniture (4) ;
- un ensemble d'obturation (7) mobile par rapport au corps de soupape (2) le long de l'axe longitudinal (A) entre une position ouverte et une position fermée pour permettre et interrompre respectivement le flux d'un fluide entre l'au moins un conduit d'alimentation (3) et l'au moins un conduit de fourniture (4) ;
- un premier corps tubulaire rigide (5) qui s'étend le long de l'axe longitudinal (A), est configuré pour guider l'ensemble d'obturation (7), est au moins partiellement logé dans le corps de soupape (2) et comprend une ouverture (32) s'étendant autour de l'axe longitudinal (A) et une pluralité d'ouvertures latérales (33) ;
- un second corps tubulaire (6) qui est couplé au corps de soupape (2 ; 42) ;
- un premier élément d'étanchéité annulaire (24) placé entre l'ensemble d'obturation (7) et le premier corps tubulaire (5) de sorte à séparer une zone humide d'une zone sèche le long du premier corps tubulaire (5) ; et
dans lequel le premier corps tubulaire (5) est logé dans le corps de soupape (2) et est axialement serré entre le corps de soupape (2) et le second corps tubulaire (6), **caractérisée en ce que**
le second corps tubulaire (6) est couplé au corps de soupape (2) au moyen d'un couplage à baïonnette ; et **en ce que**
la soupape comprend en outre un deuxième élément d'étanchéité annulaire (25) logé dans le premier corps tubulaire (5) et configuré pour interférer avec l'ensemble d'obturation (7) de sorte à interrompre le flux de fluide entre l'au moins un conduit d'alimentation (3) et l'au moins un conduit de fourniture (4), dans laquelle le premier élément d'étanchéité annulaire (24) et le deuxième élément d'étanchéité annulaire (25) sont des joints toriques.

2. Soupape selon la revendication 1, et comprenant un actionneur (8) pour commander la position de l'ensemble d'obturation (7) le long de l'axe longitudinal (A), en particulier l'actionneur (8) est un électro-aimant ou un moteur pas à pas ou un actionneur piézoélectrique.

3. Soupape selon l'une quelconque des revendications précédentes, dans laquelle le premier élément d'étanchéité annulaire (24) est logé dans un siège annulaire (28) situé dans le premier corps tubulaire (5) et/ou dans l'ensemble d'obturation (7).

4. Soupape selon l'une quelconque des revendications précédentes, dans laquelle l'ensemble d'obturation (7) comprend un obturateur de forme cylindrique ou conique ou tronconique.

5. Soupape selon l'une quelconque des revendications précédentes, dans laquelle le premier corps tubulaire (5) présente un canal axial (32) pour loger l'ensemble d'obturation (7) ;
et au moins une ouverture latérale (33) pour permettre au fluide de s'écouler du canal axial (32) à l'au moins un conduit de fourniture (4).

6. Soupape selon l'une quelconque des revendications précédentes, dans laquelle le premier corps tubulaire (5) comprend une plaque annulaire (16) qui s'étend autour de l'axe longitudinal (A) et définit la paroi supérieure de la chambre (10).

7. Soupape selon l'une quelconque des revendications précédentes, dans laquelle le corps de soupape (2) comprend une paroi cylindrique (9) agencée autour de l'axe longitudinal (A), et le premier corps tubulaire (5) est couplé à la paroi cylindrique (9) au moyen d'un troisième élément d'étanchéité annulaire (26).

8. Soupape selon l'une quelconque des revendications précédentes, dans laquelle le corps de soupape (2) comprend une autre paroi cylindrique (11), le premier corps tubulaire (5) étant couplé à l'autre paroi cylindrique (11) au moyen d'un quatrième élément d'étanchéité annulaire (27).
